# EUROPEAN PATENT SPECIFICATION

(11) **EP 3 678 022 B1**
(45) Date of publication and mention of the grant of the patent: **29.03.2023**
(21) Application number: 19150344.0
(22) Date of filing: 04.01.2019
(51) Int. Cl.: G06F 9/455, G06F 9/451

(54) **METHOD FOR OPERATING A SECOND CONTROL UNIT, A FIRST CONTROL UNIT AND A SYSTEM**
VERFAHREN ZUM BETREIBEN EINER ZWEITEN STEUEREINHEIT, ERSTE STEUEREINHEIT UND SYSTEM
PROCÉDÉ DE FONCTIONNEMENT D'UNE SECONDE UNITÉ DE COMMANDE, D'UNE PREMIÈRE UNITÉ DE COMMANDE ET SYSTÈME

(43) Date of publication of application: 08.07.2020
(73) Proprietor: OpenSynergy GmbH, 10245 Berlin (DE)
(72) Inventor: MÖLL, Matti, 10439 Berlin (DE); SALMINEN, Tero Antero, 10117 Berlin (DE); SHAIKHUTDINOV, Damir, 10245 Berlin (DE)
(74) Representative: Lavoix

(56) References cited:
- US-A1- 2009 089 453
- US-B1- 9 183 663
- RICARDO A BARATTO: "THINC: A virtual and remote display architecture for desktop computing and mobile devices", IDENTIFICATION OF SUSCEPTIBILITY GENES FOR BIPOLAR AFFECTIVE DISORDER AND SCHIZOPHRENIA ON CHROMOSOME 22Q13: PH.D. THESIS, FACULTY OF HEALTH SCIENCES, UNIVERSITY OF AARHUS, DK, 31 December 2011 (2011-12-31), pages I-XVIII, XP002716099,

## Description

The present invention concerns a method for operating a first control unit in order to transmit display commands over a computer network to a second control unit.

In addition, the present invention concerns a first control comprising at least one processor, at least one memory, and at least one network controller the at least one processor being connected to the at least one memory and the at least one network controller, the at least one network controller being adapted to be connected to a network.

Finally, the present invention relates to a system and a vehicle.

Modern automotive vehicles, like cars, have many displays installed inside, which cannot be attached to the same computer, because existing computers don't have enough physical connectors available. Therefore, there are several computers inside the vehicle, each with its own set of connected displays.

For road safety or entertainment reasons it is necessary to provide display of 3D applications on any of the available display in the automotive vehicle.

Linux provides a solution in combination with the X11 Windows manager, called GLX. In GLX OpenGL commands are sent over the network. However, this system needs a lot of bandwidth and is very slow.

Further, there are several remote display sharing solutions present in the market, however, many of them require the use of the graphic processing unit, GPU, at the server, where the application is running. at the as for example VirtualGL (see https://virtualgl.org), which tries to reduce the inconvenience of the GLX solution. In VirtualGL the GPU of the transmitting or application computer is used to render the OpenGL commands and the pixels or of the rendered frames are send to the receiving computer to display in an X11 window.

Other solutions based on virtualization using for example a QEMU (www.qemu.org) and a Virgil3D (virgil3d.github.io) only work for local display sharing, and lack of support for remote control units.

Other remote display solutions have poor 3D performance, because they transfers rendered frames over network.

US 9 183 663 B1 concerns a client-server computing system. The server includes a server application, a server 3D library and a virtual display driver. The client includes a client application, a client 3D library and a client display driver. A similar structure is disclosed in the thesis of RICARDO A BARATTO, "THINC: A virtual and remote display architecture for desktop computing and mobile devices", Columbia University.

US 2009/089453 A1 also concerns the remote visualisation of applications. The system comprising an encoder receiving the operations from an OpenGL library and form an OS specific OpenGL interface and translates these operations into an OS-independent wire protocol or data stream.

Object of the invention is to provide methods, control units and a system, which enables a simple display of three dimensional (3D) information at a remote display comprising its own control unit.

The present invention is defined according to the independent claims.

According to one aspect, a method is provided according to claim 1. The dependent claims set out particular embodiments of the invention.

According to another aspect, a system is provided according to claim 7. The dependent claims set out particular embodiments of the invention.

According to another aspect, a vehicle, in particular automotive vehicle, is provided comprising a system according to an embodiment disclosed herein.

According to a further aspect, a computer program product is provided comprising commands for executing a method according an embodiment disclosed herein, when loaded and executed on a processor. According to an embodiment a computer program product may be a physical software product, for example a hard disc, a solid state disc, a CD-ROM, a DVD, comprising the program.

According to other aspects, the present invention relates to non-volatile memory, for example a hard disc, a solid state device, a CD-ROM, a DVD, including a program containing commands for executing the method according an embodiment disclosed herein, when loaded and executed on a processor.

Further advantages, features, aspects and details are evident from the dependent claims, the description and the drawings.

So that the manner in which the above recited features of the present invention can be understood in detail, a more particular description of the invention, briefly summarized above, may be read by reference to embodiments. The accompanying drawings relate to embodiments of the invention and are described in the following:
Fig. 1 shows schematically the hardware of an electronic control unit (ECU);
Fig. 2 shows schematically a system of a first control unit and a second control unit according to a first embodiment;
Fig. 3 shows a flow chart of the first control unit;
Fig. 4 shows a flow chart of the second control unit;
Fig. 5 show another system according to an embodiment; and
Fig. 6 shows schematically a system of a first control unit and a second control unit according to a second embodiment.

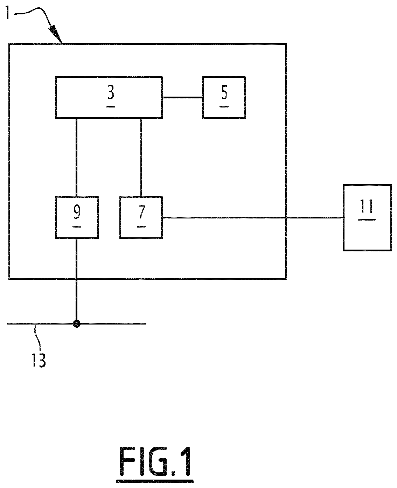

Figure 1 shows schematically an electronic control unit (ECU) 1. The ECU 1 might be also called control unit in the present patent application. For example, the ECU 1 is realized as a system on chip (SoC). According to an embodiment, an ECU comprises one or more processors 3 connected to one or more memories 5. The or each processor 3 may includes one or more cores. For example, the processor 3 comprises at least 1, 2, 3, 4, 5, 6, 7, 8 or more cores. Typically, each core is an independent processing unit, independent from the other cores. The cores enable parallel computing in the processor 3.

Further, the ECU 1 may comprise interface for connecting to one or more bus systems, for example one or more hardware controller 9 for a network connection 13. The network 13 may be an Ethernet network, a controller area network (CAN) busses and/or a FlexRay busses. The ECU may also comprise one or more further hardware controller for connecting to one or more wired or wireless connecting means, for example a Bluetooth connection, an Ethernet connection and/or to a USB (Universal Serial Bus) connecting means.

Usually, an automotive vehicle comprises a plurality of electronic control units according to the present invention, which are spaced apart within the vehicle. According to an embodiment, the ECU 1 is provided as an embedded system in a vehicle.

For example, the ECU 1 may be connected to some sensors or drivers via an interface, for example to drive the window, or to sense the angulation of the steering wheel, the level of oil or water in the motor.

Further, to ECU may be connected to an input device, for example a keyboard, one or more buttons, or the like.

The ECU 1 may be connected to one or more displays via one or more display ports. However, not all control units, disclosed herein have to be provided with a display port. For example, as it will be explained later the first control unit does not necessarily need a hardware connection to an own display.

Further, the ECU 1 includes a graphic processing unit (GPU) 7. The graphic processing unit (GPU) 7 is a device specifically adapted for calculating and/or rendering graphics, for example two or three dimensional graphics. For that purpose the GPU 7 has a highly parallel structure, where processing of data is done in parallel. According to an embodiment, the GPU 7 is separated from the one or more processors 3. In other embodiments, the GPU 7 is integrated into the one or more processors 3. Typically, a GPU 7 sends a rendered frame to the one or more displays 11, for example directly or via a further display controller, which for example performs some post processing of the rendered frame.

According to an embodiment, rendering is the process for generating an image or a frame for the one or more displays based on GPU specific commands. For example models or scene files, which are a virtual model defining the characteristics of objects and lights, are used as a basis for rendering the frame. For example during rendering, it is determined which objects are visible for the observer, whether the objects are shaded or not, the light distribution within the scene etc.

Rendering includes calculations, which vary according to the size and the complexity of a scene. Thus, the time for rendering the scene is variable.

Display commands, for example OpenGL commands, are directly executed after they have been translated to the GPU specific (graphic) commands by the GPU driver. Display commands are usually application program interface (API) commands, in particular at a high level.

In some embodiments GPU driver software translates the display commands in GPU specific (graphic) commands and provides the graphic commands to the GPU for execution. Commands that are not available in the command set of the GPU have to be emulated by the GPU driver software or the operating system.

According to embodiments, display commands include for example shader commands, geometry and/or texture commands.

For example, the geometry and texture commands are defined in an application program interface (API), for example OpenGL. OpenGL commands is a cross language cross-platform application programming interface (API). OpenGL for Embedded Systems (OpenGL ES or GLES) is a subset of the OpenGL computer graphics rendering application programming interface (API) designed for embedded systems like smartphones, tablet computers, video game consoles and PDAs (personal digital assistants).

OpenGL is a standard of the Khronos Group, Beaverton, USA. OpenGL includes about 250 commands, which enable the rendering of complex 3D scenes in real time.

According to embodiments, shader commands define the characteristics of the surface of an object, in particular the absorption and the diffusion of light, the texture to use, the reflection, refractions, and the shadows, primitive displacement and/or some post-treatment effects. An example of shader commands is used in the OpenGL shading language (GLSL).

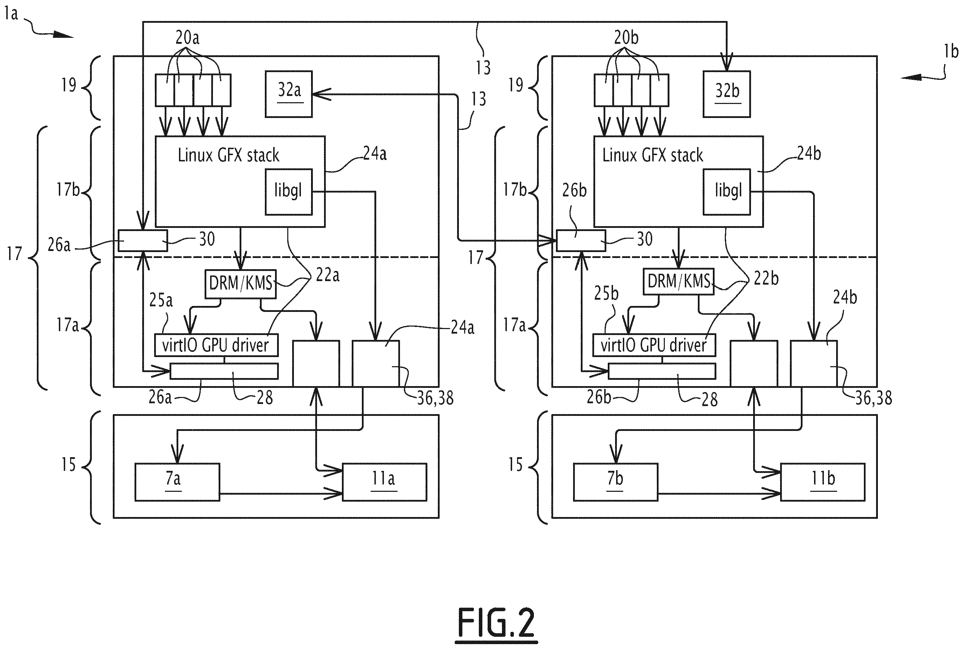

Fig. 2 shows schematically a system of a first control unit 1a and a second control unit 1b according to a first embodiment. Each of the first and second control unit 1a or 1b may correspond to a control unit 1. In the embodiment shown in Figure 2 the first and second control units 1a, 1b are identically configured. However in other embodiments only one of the control units may be connected to a display 11 and therefore only one of the control units need a physical GPU 7, 7a, 7b. For example, one of the control units 1a, 1b may only transmit display commands, whereas the other control unit receives the display commands, provides them to a GPU 7, 7a, 7b for rendering and sends the rendered frames to the display 11.

Figure 2 shows several levels, the hardware level 15, the operating system level 17, and the application level 19. In the operating system level an operating system is running. For example, in an embodiment the operating system may be Linux. In other embodiments, also other operating systems may be used. The present disclosure will describe the invention with Linux. Equivalent routines may be used in other operating systems. Usually, the programs running in the operating system level have another privilege to access hardware resources compared to programs running in the application level. In other words, programs running in the application level may have less rights to access hardware or software resources compared to programs running in the operating system level.

The operating system level is split into two subgroups, the kernel program routines 17a and other operating system routines 17b.

The control units 1a, 1b include respectively one or more applications 20a, 20b. The applications are typically running in the application level 19. However, in other embodiments only one of the control units 1a, 1b may include one or more applications 20a, 20b. The at least one application 20a, 20b is adapted to generate display commands, for example OpenGL commands and/or OpenGL shading commands. Further, the applications 20a, 20b are adapted to provide a texture compression. The texture compression is defined by the OpenGL standard of the Khronos Group, Beaverton, USA

Further, the control units 1a, 1b include respectively a graphic stack which includes a plurality of GPU drivers 22a, 22b, 24a, 24b. For example the GPU drivers 22a, 22b, 24a, 24b include routines for translating graphic commands into GPU specific commands. The graphic stack may include in some embodiments further modules, like a DRM/KMS module in Linux. The direct rendering manger (DRM) enables access to the GPU without passing via an X-Windows server and KMS (kernel based mode setting) enables to manage the window modes.

In the present embodiment, each control unit 1a, 1b includes two GPU drivers 22a, 22b, 24a, 24b.

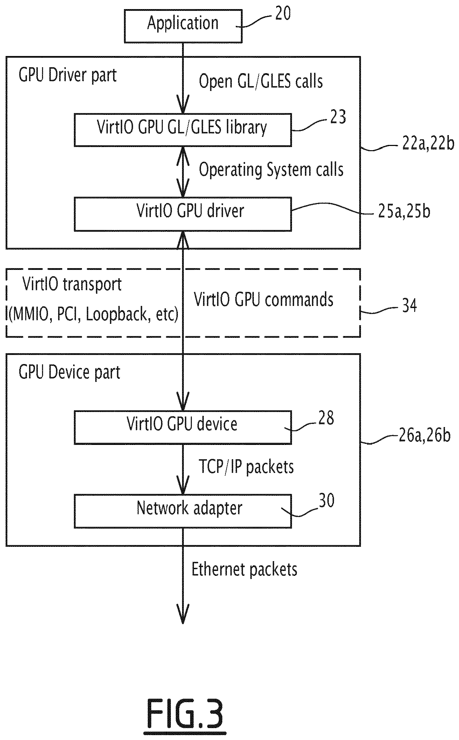

A first GPU driver 22a, 22b is provided for a virtual GPU device 26a, 26b. The first GPU driver 22a, 22b is also called GPU driver part in Figure 3. The virtual GPU device 26a, 26b is also called GPU device part in Figure 3.

In the embodiment of Figure 2, the first GPU driver 22a, 22b and the virtual GPU device 26a, 26b are running concurrently in the same operating system.

According to embodiments, the first GPU driver 22a, 22b is adapted to transform the display commands into graphic commands. The graphic commands are the commands that are able to be interpreted by the virtual GPU device 26a, 26b.

The graphic commands are, according to an embodiment, orthogonal functional commands that make up a, in particular the complete, graphical processing unit and display functionality. The graphic commands, in particular the geometry and/or texture commands, are selected of a reduced set of graphic commands including preferably between 10 and 50 graphic commands, in particular between 15 and 30 graphic commands. These graphic commands can be separated in two groups, one for two dimensional, 2D, graphic commands and another one for three dimensional, 3D, graphic commands. Further, the shading commands from the display commands are transformed into an intermediate representation to avoid parser exploits as well as to limit the amount of transferred data. For example GLSL commands are transformed using the Tungsten Graphics Shader infrastructure, TGSI, intermediate representation, originally defined by Tungsten Graphics; Inc, in particular in order to avoid parser exploits as well as limit the amount of transferred data. Further display command, in particular GL command pipelining can be facilitated.

For example, the GPU driver 22a, 22b is adapted to send multiple request or graphic commands without waiting for an acknowledgement of the virtual GPU device 26a, 26b, in particular that the display command (or graphic command) has been completed by the virtual GPU, for example rendered by the virtual CPU. For example, the multiple requests or graphic commands may be sent in parallel. In some embodiments, the GPU driver may then wait that all previously sent graphic commands have been acknowledged by the virtual GPU device 26a, 26b, in particular that they have been completed, i.e. the frame has been rendered. In some embodiments this is called fencing, in particular in OpenGL.

In some embodiments queueing algorithms like PIE (defined RFC 8033) or FQ_CoDel (integrated in Linux) may be used to ensure fairness between several GL contexts and thus avoid ahead of line blocking before composition and complicated QoS (Quality of Service) systems needing extensive tuning and command inspection.

In other embodiments, the graphic commands are directly provided to the virtual GPU device 26a, 26b without transformation to graphic commands.

The virtual GPU device 26a, 26b transforms received graphic commands into sequential data and sends them via a network adapter, shown in Figure 3, to another control unit. For that purpose the virtual GPU device 26a, 26b includes a virtual GPU adapting device 28, which is called in some embodiments virtIO GPU device 28, and the network adapter 30. In sequential data the data objects, for example the bytes or characters, are aligned one after the other so that it can be send over a network using network packets. In other words, the sequential data forms a data stream.

According to an embodiment, the virtual GPU device 26a, 26b is adapted to collect a plurality of display commands and in particular graphic commands provided from the GPU driver 22a, 22b. The number of collected graphic commands depends on the configuration, in particular the throughput through the network 13 to another control unit and/or the number of graphic commands provided by the GPU driver.

Further, the virtual GPU device 26a, 26b, in particular the virtual GPU adapting device 28, is adapted to determine the parameters of the collected plurality of display commands or graphic commands stored in at least one memory section using a reference to the at least one section of the at least one memory 5 of the parameters. For example, the virtual GPU device 26a, 26b is adapted to read the respective sections of the at least one memory 5. For example a reference to at least one section of the at least one memory may be a pointer and/or at least one memory address enabling the virtual GPU device to read the parameter.

The parameters are adapted to define a graphical scene state, for example, they include scene parameters and/or camera parameters. Scene parameters include object, light and/or shadow parameters. Camera parameters include a transformation matrix of the camera. Other examples of parameter are entail blenders, rasterizers, shaders, vertexes, surfaces, samplers, queries, target streams, and/or framebuffer objects of a 2D scene rendered by the at least one CPU, here for example processor 3, on which the application 20a, 20b is running.

The virtual GPU device 26a, 26b, in particular the virtual GPU adapting device 28, is adapted to aligning the display commands or graphic commands and their parameters in sequential data wherein the references to the at least one memory section is transformed to an offset within the sequential data forming a data stream. For example, if the parameters are stored in multiple memory addresses, the virtual GPU device 26a, 26b may collect them using a vectored I/O (input /output) procedure. The virtual GPU device 26a, 26b, in network adapter 30, is adapted to encapsulate, the created data stream in one or more network packets and to send it over the network 13 to a target control unit. The network packets may be TCP/IP packets, according to an embodiment.

In some embodiments, the virtual GPU device 26a, 26b, in particular the network adapter 30, is adapted to provide a framebuffer compression, in particular of 2D frames. For that purpose, compression algorithms, in particular domain specific compression algorithms, may be used to safe network bandwidth.

Further, the virtual GPU device 26a, 26b, in particular the virtual GPI adapting device 28, as adapted to send acknowledgements to the first GPU driver 22a, 22b. The acknowledgements include information to pretend that the graphic commands have been executed by the GPU, in other words that a picture frame has been successfully rendered. The acknowledgements to the graphic commands are sent to the first GPU driver 22a, 22b without knowing whether the graphic commands has been actually rendered by a GPU on the second or target control unit. In some embodiments, the acknowledgement is sent for all previously received display or graphic commands.

The second GPU driver 24a, 24b is adapted to transform the display commands into GPU specific commands for the hardware GPU 7a, 7b. In other words, the GPU specific commands depend on the used GPU 7a, 7b and may differentiate from one GPU to another.

Further, the control units 1a, 1b each comprise a virtual display device 32. The virtual display device 32a, 32b is running in the application level 19. The virtual display device 32a, 32b is adapted to receive the sequential data in the network packets including the transformed display commands over the network 13, for example the Ethernet network.

The virtual display device 32a, 32b is adapted transform the sequential data again into display commands and provides them to the second GPU driver 24a, 24b. For example, the 3D specific commands are decoded and in particular translated to OpenGL or EGL commands. For that purpose the parameters are stored again into the memory 5 and the an offset within the sequential data forming the data stream is converted to references to at least one memory section, which are used by the display commands.

A system according to embodiments disclosed herein comprises two control units 1, 1a, 1b. A first control unit acts as a transmitter and a second control unit acts as a receiver. The second control unit is a control unit where the running application on the first control unit is displayed. The first and second control units are connected via a computer network, for example Ethernet. Also other computer networks may be used. According to embodiments, there can be several receiving control units for each transmitting control unit in the system.

Each receiving control unit may set, according to some embodiments, a different (virtual) camera position, by adapting the camera position provided in the display commands. For that purpose, the received display commands are examined and the found camera commands are adapted to an individual position.

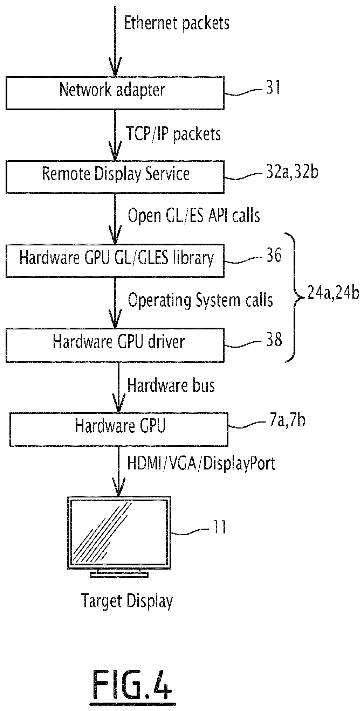

In the following the different steps of the embodiments disclosed herein are described using the Figures 3 and 4.

The application 20 uses display commands, for example OpenGL/OpenGL ES API commands or calls, to set up a scene, load textures and/or tune a rendering picture. The application may provide a texture compression as detailed above.

The application 20 then provides the display commands to the GPU driver 22a, 22b.

The GPU driver 22a, 22b converts the display commands into graphic commands, as described above, using a graphic implementation library 23, for example a OpenGL/GLES implementation library 23, for example a VirtIO OpenGL/GLES implementation library 23, for example as used in QEMU 2.4 and virgil3D, and a converting module 25a, 25b. Further in an embodiment the GLSL commands are transformed into the Tungsten Graphics Shader infrastructure, TGSI, intermediate representation.

In more detail, in the embodiment of Figure. 3, these display command calls (shown in Figure 3 as Open GL/GLES calls) of the application 20 are converted into operating system calls by the graphic implementation library 23, for example the OpenGL/GLES implementation library in Figure 3, and the operating system calls are provided the to the converting module 25a, 25b, here also called VirtIO GPU driver 25a, 25b, for example as used in QEMU 2.4 and virgil3D.

The converting module 25a, 25b then converts those operating system calls into graphic commands, for example VirtIO GPU commands, which are transferred to the virtual GPU Device 26a, 26b for example by using a transport standard 34, for example VirtIO transport 34. The transport standard may alternatively be a PCI (peripheral component interconnect standard) or a MMIO (Memory-mapped I/O). In other embodiments, which may be used for example in the embodiment of Figure 2, a loopback function may be used in case that the virtual GPU device 26a, 26b and the GPU driver 22a, 22b are running in the same operating system to transmit the graphic command or display command from the GPU driver 22a, 22b to the virtual GPU device 26a, 26b. A loopback function is for example a localhost in case of a network adapter. In other words, the graphic commands or display command calls send out by the GPU driver 22a, 22b and in particular from the operating system are feed back to the operating system on which the GPU driver 22a, 22b is running and received or read by the virtual GPU device 26a, 26b.

The graphic commands for the GPU device 26a, 26b, which are called in the example of Fig. 3 VirtIO GPU commands, are sent to the GPU device 26a, 26b.

The acknowlegment of the commands is then sent back to the GPU Driver 22a, 22b, for example using the transport standard as discussed above, for example using VirtIO transport, so GPU Driver can continue with sending new graphic commands to the GPU device 26a, 26b. As discussed above, the acknowledgement pretending that the graphic commands have been executed by the GPU are sent independently whether the frame actually has been rendered by the GPU of the target control unit.

As described above, the virtual GPU device 26a, 26b collects a plurality of graphic commands received from the GPU driver 22a, 22b converts the graphic commands into sequential data and which are then sent in network packets, for example TCP/IP packets over the network to the second control unit.

According to some embodiments, TCPI/IP offloading may be used in order to reduce the amount of processor cycles per packet in order to reduce latency. Further, dynamically switching between interrupt driver mode and polling for network packet handling can greatly reduce flow latency.

In the receiving second control unit the network packets and therefore the sequential data including the converted graphic commands are received by the virtual display device 32a, 32b via a network adapter 31 (not shown in Figure 2), which uses a hardware GPU to execute received display commands, as seen Figure 4.

The network adapter 31 receives Ethernet packets from the first control unit, reconstructs sequential data. The sequential data may represent a TCP/IP data stream. The sequential data is read or consumed by the virtual display device 32a, 32b, called in Figure 4 remote display service. The network adapter 31 may be the same physical network adapter 30 as for the sending of the network packets by the virtual GPU device 26a, 26b.

The virtual display device application 32a, 32b the graphic commands, for example VirtIO GPU commands, from sequential data and subsequently and converts them back into the display commands, for example into OpenGL/OpenGL ES API calls for the hardware GPU.

These display commands are delivered to a specific display hardware command library implementation, which depends on the vendor of the GPU 7a, 7b. For example the specific display hardware command library implementation is a vendor-specific OpenGL/OpenGL ES library implementation. Then, the display commands are converted into GPU dependent commands and provided via a hardware GPU driver to the (hardware) GPU 7a, 7b, where they are finally rendered and displayed on a connected target display 11.

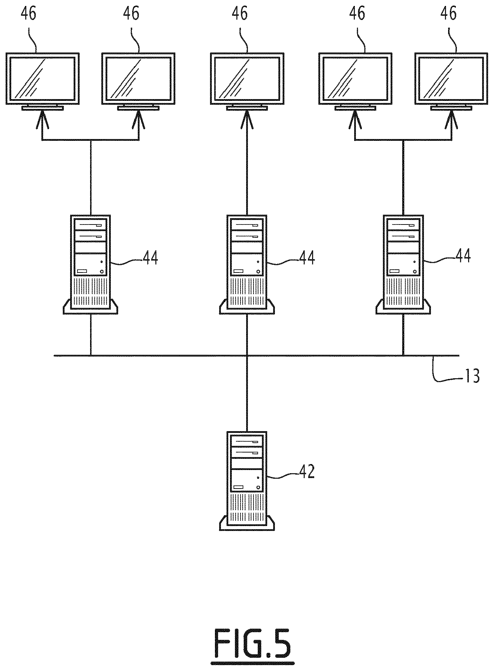

In Figure 5, another embodiment of the system 40 is shown. One first control unit 42 transmitting the display commands is connected to a plurality of second control units 44, each being connected to one or more displays 46. The control units 42, 44 correspond to the control units disclosed herein.

In further embodiments, several transmitting control units 46 can exist, and receivers can display applications from several transmitting control units on the connected displays 46 to achieve the desired user experience.

According to embodiments disclosed herein a virtual graphical processing unit (GPU) device is emulated on the transmitting side. The application 20, 20a, 20b then uses the virtual GPU device, but all commands that are sent to the GPU are forwarded via Ethernet network to receiving control units 1, 1a, 1b, 44.

The receiving control unit 1, 1a, 1b, 44, the display commands are received, and then executed on the actual hardware GPU, and result of execution is then displayed on the connected displays 11, 46.

In the embodiment shown in Figure 2, the virtual GPU device 26a, 26b and the GPU driver 22a, 22b run in the same operating system.

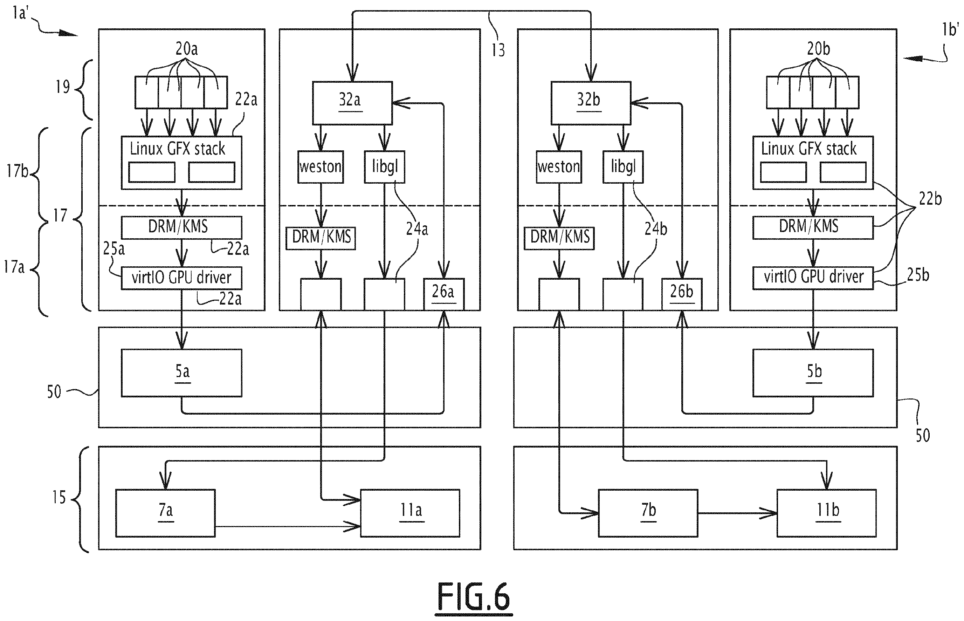

In another embodiment, shown in Figure 6, a virtualization system 50, for example a hypervisor is used. The same features have the same reference numbers as in the previous embodiments. The system includes a first control unit 1a' and a second control unit 1b'. Respectively two guest systems 52a, 52b, 54a, 54b are running on the virtualization system 50.

In other words, the virtualization system 50 enables several guest systems to simultaneously run on the one or more processors 3. The number of guest systems is not limited to two guest systems 52a, 52b, 54a, 54b, the system may include even less or more guest systems , for example three, four, five, six, seven, or more guest systems. Each guest system may include an operating system.

The virtualization system 50 is adapted to assign the hardware resources to the respective guest systems and to provide inter partition communication (IPC) links between the different guest systems 52a, 52b, 54a, 54b running on the same processor 3. For example, the virtualization system is a hypervisor. The virtualization layer provides and defines a simulated hardware, in particular timer, interrupt controller, memory and/or a processor 25 (CPU), for guest systems installed.

In this system the GPU driver 22a, 22b and the virtual GPU device 26a, 26b are provided in separate guest systems. In other words, the GPU driver 22a, 22b are provided on the first guest system 52a, 52b and the GPU device 26a, 26b are provided on the second guest system 54a, 54b. The communication between the GPU driver 22a, 22b and the GPU device 26a, 26b is provided by the virtualization system, for example by using a shared memory and/or inter partition communication.

The second guest system 54a, 54b has access to the computer network 13.

The functioning of the system in Figure 6 is identical to the system in the previous embodiments, so that it is referred back to the detailed explanation of the previous embodiments.

In the embodiment of Figure 6, the GPU driver for the virtual GPU device and the GPU driver for the physical GPU 7a,7b are separated by different guest systems.

According to embodiments herein, the system is more efficient in terms of both network latency and throughput for 3D applications, because it uses remote GPU for rendering instead of local one. So, large textures and 3D scenes can be loaded into remote GPU memory on the start of application, and then only small amount of display commands, for example OpenGL commands, are transferred over the network for each rendered frame, delivering near native performance for 3D applications.

The invention solves this drawback by forwarding OpenGL commands over network instead of complete images, lowering both latency and throughput.

Further, the ECU running the application and the ECU rendering the frames of the application interfaces are separated.

## Claims

1. Method for transmitting a display command from a first control unit (1, 1a, 1b, 1a', 1b', 42) of a vehicle to a second control unit (1, 1a, 1b, 1a', 1b', 44) of the vehicle, the second control unit being spaced apart from the first control unit, comprising steps of a method for operating the first control unit (1, 1a, 1b, 1a', 1b', 42) ir order to transmit display commands over a computer network (13) to the second control unit (1, 1a, 1b, 1a',1b', 46), comprising:
generating, by an application (20a, 20b) at the first control unit, at least one display command, the at least one display command enabling a rendering of a frame comprising a three-dimensional image by a graphic processing unit (7a, 7b), wherein the display command is an OpenGL command and/or an OpenGL shader command;
receiving, by a graphic processing unit driver (22a, 22b) on the first control unit, the at least one display command;
transforming the display commands into graphic commands;
providing, by the graphic processing unit driver (22a, 22b), to a virtual graphic processing unit device (26a, 26b) the graphic commands being transformed from the display commands;
collecting, by the virtual graphic processing unit device (26a, 26b), a plurality of graphic commands, wherein collecting a plurality of graphic commands includes sending, by the virtual graphic processing unit device (26a, 26b), an acknowledgement of at least one received graphic command to the graphic processing unit driver (22a, 22b), wherein the acknowledgement pretends that at least one display frame based on the at least one graphic command has been rendered by a GPU independently of whether the at least one display frame based on the at least one graphic command has been rendered on a GPU of the second control unit, wherein the sending of the acknowledgement is a fencing in OpenGL;
determining parameters of the collected plurality of graphic commands stored in at least one section of the at least one memory (5) using at least one reference to the at least one section of the at least one memory (5);
aligning the graphic commands and their parameters in sequential data, wherein the references to the at least one section of the at least one memory (5) is transformed to an offset within the sequential data;
encapsulating, by virtual graphic processing unit device, the created sequential data in one or more network packets;
transmitting the at least one network packet by the virtual graphic processing unit device (26a, 26b) over the computer network to the second control unit adapted to generate display frames of at least one image according to the display commands;
and the method further comprises method steps for operating the second control unit (1, 1a, 1b, 1a',1b', 44) in order to generate display frames from display commands received over the computer network (13) from the first control unit, comprising:
receiving at least one network packet from the first control unit (1, 1a, 1b, 1a',1b', 42), the network packet comprising sequential data encoding graphic commands and their parameters, wherein parameters of the graphic commands transformed from display commands are referenced with an offset within the sequential data, wherein a display command enables a rendering of a frame comprising three-dimensional image by a graphic processing unit (7a, 7b);
decoding the graphic commands and storing their parameters in at least one section of at least one memory (5), wherein decoding includes transforming the offset into a reference to the at least one section in at least one memory (5);
converting the graphic commands into the display commands being OpenGL/OpenGL for embedded systems, OpenGL ES or GLES, API calls for a graphic processing unit, GPU;
converting the display commands and their parameters into graphic processing unit, GPU, specific commands;
providing the GPU specific commands to a graphic processing unit (7, 7a, 7b) of the second control unit (1, 1a, 1b, 1a',1b', 44);
rendering a display frame based on the GPU specific commands.

2. Method according to claim 1, wherein the display commands include geometry, commands, texture commands and shader commands, wherein in particular the geometry and texture commands are OpenGL commands, and/or the shader commands are OpenGL shading language.

3. Method according to claim 1 or 2, wherein the parameters include framebuffer objects of a 2D scene rendered by a CPU, scene parameters and/or camera parameters, entail blenders, rasterizers, shaders, vertexes, surfaces, samplers, queries and/or target streams.

4. Method according to any one of the preceding claims, wherein the display commands are transformed into orthogonal functional commands that make up the complete graphical processing unit and display functionality; and wherein the graphic commands are selected of a reduced set of graphic commands compared to the display commands, wherein the graphic commands includes preferably between 10 and 50 graphic commands, in particular between 15 and 30 graphic commands.

5. Method according to one of the preceding claims, further comprising: providing the display frame to at least one display (11).

6. Computer program product comprising commands for executing the method according to any one of the preceding claims, when loaded and executed on one or more processors.

7. System comprising one or more first control units of a vehicle, each the first control unit (1, 1a, 1b, 1a', 1b', 42) comprising at least one processor (3), at least one memory (5), and at least one network controller (9) the at least one processor being connected to the at least one memory and the at least one network controller, the at least one network controller (9) being adapted to be connected to a network (13), wherein the first control unit is adapted to :
generate, by an application (20a, 20b), at least one display command, the at least one display command enabling a rendering of a frame comprising three-dimensional image by a graphic processing unit (7a, 7b) wherein the display command is an OpenGL command and/or an OpenGL shader command;
receive, by a graphic processing unit driver (22a, 22b) on the first control unit, the at least one display command;
transforming, by the graphic processing unit driver, the display commands into graphic commands;
provide, by the graphic processing unit driver (22a, 22b) the graphic commands to a virtual graphic processing unit device (26a, 26b);
collect, by the virtual graphic processing unit device (26a, 26b), a plurality of graphic commands, wherein collecting a plurality of graphic commands includes sending, by the virtual graphic processing unit device, an acknowledgement of at least one received graphic or display command to the graphic processing unit driver (22a, 22b), wherein the acknowledgement pretends that at least one display frame based on the at least one graphic or display command has been rendered by a GPU independently of whether the at least one display frame based on the at least one graphic command has been rendered on a GPU of the second control unit, wherein the sending of the acknowledgement is a fencing in OpenGL;
determine parameters of the collected plurality of graphic commands stored in at least one section of the at least one memory (5) using at least one reference to the at least one section of the at least one memory (5);
align the graphic commands and their parameters in sequential data, wherein the references to the at least one section in the at least one memory is transformed to an offset within the sequential data;
encapsulate, by virtual graphic processing unit device, the created sequential data in one or more network packets;
transmit the at least one network packet by the virtual graphic processing unit device (26a, 26b) over the computer network to a second control unit adapted to generate display frames of at least one image according to the display commands,
wherein the system further comprises at least one second control unit of the vehicle, in particular a plurality of second control units, wherein the second control unit comprises at least one processor (3), at least one memory (5), at least one graphic processing unit, GPU, (7, 7a, 7b) at least one display port connected to the output of the GPU and connectable to at least one display (11), and at least one network controller (9), the at least one processor (3) being connected to the at least one memory (5), the GPU and the network controller (9), the at least one network controller (9) being adapted to be connected to a network (13), the second control unit being adapted to:
receive at least one network packet from the first control unit (1, 1a, 1b, 1a', 1b', 42), the network packet comprising sequential data encoding graphic commands and their parameters, wherein parameters of the graphic commands transformed from display commands are referenced with an offset within the sequential data, wherein a display command enables a rendering of a frame comprising three-dimensional image by a graphic processing unit (7a, 7b); decode the graphic commands and storing their parameters in at least one section of at least one memory (5), wherein decoding includes transforming the offset into a reference to the at least one section in the at least one memory;
convert the graphic commands into the display commands being OpenGL/OpenGL for embedded systems, OpenGL ES or GLES, API calls for a graphic processing unit, GPU;
convert the display commands and their parameters into graphic processing unit, GPU, specific commands;
provide the GPU specific commands to a graphic processing unit (7, 7a, 7b) of the second control unit (1, 1a, 1b, 1a', 1b', 44);
render, by the GPU, a display frame based on the GPU specific commands, wherein the at least one second control unit is adapted to receive the network packets including the sequential data encoding display commands or graphic commands and their parameters emitted from the at least one first control unit.

8. System according to claim 7, wherein it is further adapted to transform the display commands into orthogonal functional commands that make up the complete graphical processing unit and display functionality; and wherein the graphic commands are selected of a reduced set of graphic commands compared to the display commands, wherein the graphic commands includes preferably between 10 and 50 graphic commands, in particular between 15 and 30 graphic commands.

9. Vehicle, in particular automotive vehicle, comprising a system according to claim 7 or 8.

## Patentansprüche

1. Verfahren zum Übertragen eines Anzeigebefehls von einem ersten Steuergerät (1, 1a, 1b, 1a', 1b', 42) eines Fahrzeugs an ein zweites Steuergerät (1, 1a, 1b, 1a', 1b', 44) des Fahrzeugs, wobei das zweite Steuergerät von dem ersten Steuergerät beabstandet ist, umfassend Schritte eines Verfahrens zum Betreiben des ersten Steuergeräts (1, 1a, 1b, 1a', 1b', 42), um Anzeigebefehle über ein Computernetzwerk (13) an das zweite Steuergerät (1, 1a, 1b, 1a', 1b', 46) zu übertragen, umfassend:
Erzeugen, durch eine Anwendung (20a, 20b) in dem ersten Steuergerät, mindestens eines Anzeigebefehls, wobei der mindestens eine Anzeigebefehl ein Rendern eines Frames, umfassend ein dreidimensionales Bild, durch eine Grafikverarbeitungseinheit (7a, 7b) ermöglicht, wobei der Anzeigebefehl ein OpenGL-Befehl und/oder ein OpenGL-Shader-Befehl ist;
Empfangen des mindestens einen Anzeigebefehls durch einen Grafikverarbeitungseinheit-Treiber (22a, 22b) in dem ersten Steuergerät;
Umwandeln der Anzeigebefehle in Grafikbefehle;
Bereitstellen, durch den Grafikverarbeitungseinheit-Treiber (22a, 22b), der aus den Anzeigebefehlen umgewandelten Grafikbefehle an eine virtuelle Grafikverarbeitungseinheit (26a, 26b);
Sammeln einer Vielzahl von Grafikbefehlen durch die virtuelle Grafikverarbeitungseinheit (26a, 26b), wobei das Sammeln einer Vielzahl von Grafikbefehlen das Senden einer Bestätigung mindestens eines empfangenen Grafikbefehls durch die virtuelle Grafikverarbeitungseinheit (26a, 26b) an den Grafikverarbeitungseinheit-Treiber (22a, 22b) beinhaltet, wobei die Bestätigung vorgibt, dass mindestens ein Anzeige-Frame, das auf dem mindestens einen Grafikbefehl basiert, von einer GPU gerendert wurde, unabhängig davon, ob das mindestens eine Anzeige-Frame, das auf dem mindestens einen Grafikbefehl basiert, auf einer GPU des zweiten Steuergeräts gerendert wurde, wobei das Senden der Bestätigung ein Abgrenzen in OpenGL ist; Bestimmen von Parametern der gesammelten Vielzahl von Grafikbefehlen, die in mindestens einem Abschnitt des mindestens eines Speichers (5) gespeichert sind, unter Verwendung mindestens einer Referenz zu dem mindestens einen Abschnitt des mindestens einen Speichers (5);
Ausrichten der Grafikbefehle und ihrer Parameter in sequenzielle Daten, wobei die Referenzen auf den mindestens einen Abschnitt des mindestens eines Speichers (5) in einen Offset innerhalb der sequentiellen Daten umgewandelt werden;
Einkapseln, durch eine virtuelle Grafikverarbeitungseinheit-Vorrichtung, der erzeugten sequenziellen Daten in ein oder mehrere Netzwerkpakete;
Übertragen des mindestens einen Netzwerkpakets durch die virtuelle Grafikverarbeitungseinheit (26a, 26b) über das Computernetzwerk an das zweite Steuergerät, das geeignet ist, Anzeige-Frames mindestens eines Bilds gemäß den Anzeigebefehlen zu erzeugen; und wobei das Verfahren ferner Verfahrensschritte zum Betreiben des zweiten Steuergeräts (1, 1a, 1b, 1a', 1b', 44) umfasst, um Anzeige-Frames aus Anzeigebefehlen zu erzeugen, die über das Computernetzwerk (13) von dem ersten Steuergerät empfangen werden, umfassend:
Empfangen mindestens eines Netzwerkpakets von dem ersten Steuergerät (1, 1a, 1b, 1a', 1b', 42), das Netzwerkpaket umfassend sequenzielle Daten, die Grafikbefehle und ihre Parameter kodieren, wobei Parameter der Grafikbefehle, die aus Anzeigebefehlen umgewandelt werden, mit einem Offset innerhalb der sequenziellen Daten referenziert werden, wobei ein Anzeigebefehl ein Rendern eines Frames, das ein dreidimensionales Bild umfasst, durch eine Grafikverarbeitungseinheit (7a, 7b) ermöglicht;
Dekodieren der Grafikbefehle und Speichern ihrer Parameter in mindestens einem Abschnitt mindestens eines Speichers (5), wobei ein Dekodieren das Umwandeln des Offsets in einen Verweis auf den mindestens einen Abschnitt in mindestens einem Speicher (5) beinhaltet;
Umwandeln der Grafikbefehle in die Anzeigebefehle, die OpenGL/OpenGL für eingebettete Systeme, OpenGL ES oder GLES, API-Aufrufe für eine Grafikverarbeitungseinheit, GPU, sind;
Konvertieren der Anzeigebefehle und ihrer Parameter in spezifische Befehle der Grafikverarbeitungseinheit, GPU;
Bereitstellen der GPU-spezifischen Befehle an eine Grafikverarbeitungseinheit (7, 7a, 7b) des zweiten Steuergeräts (1, 1a, 1b, 1a', 1b', 44);
Rendern eines Anzeige-Frames basierend auf den GPU-spezifischen Befehlen.

2. Verfahren nach Anspruch 1, wobei die Anzeigebefehle Geometriebefehle, Texturbefehle und Shader-Befehle beinhalten, wobei insbesondere die Geometrie- und Texturbefehle OpenGL-Befehle sind, und/oder die Shader-Befehle OpenGL-Shading-Sprache sind.

3. Verfahren nach Anspruch 1 oder 2, wobei die Parameter Framebuffer-Objekte einer von einer CPU gerenderten 2D-Szene, Szenenparameter und/oder Kameraparameter beinhalten, Blender, Rasterizer, Shader, Vertexe, Oberflächen, Sampler, Abfragen und/oder Zielströme einschließen.

4. Verfahren nach einem der vorherigen Ansprüche, wobei die Anzeigebefehle in orthogonale Funktionsbefehle umgewandelt werden, die die vollständige Funktionalität der grafischen Verarbeitungseinheit und der Anzeige ausmachen; und wobei die Grafikbefehle aus einer im Vergleich zu den Anzeigebefehlen reduzierten Menge von Grafikbefehlen ausgewählt sind, wobei die Grafikbefehle vorzugsweise zwischen 10 und 50 Grafikbefehle, insbesondere zwischen 15 und 30 Grafikbefehle, beinhalten.

5. Verfahren nach einem der vorherigen Ansprüche, ferner umfassend: Bereitstellen des Anzeige-Frames für mindestens eine Anzeige (11).

6. Computerprogrammprodukt, umfassend Befehle zum Ausführen des Verfahrens nach einem der vorherigen Ansprüche, wenn sie auf einen oder mehrere Prozessoren geladen und ausgeführt werden.

7. System, umfassend ein oder mehrere erste Steuergeräte eines Fahrzeugs, wobei jedes erste Steuergerät (1, 1a, 1b, 1a', 1b', 42) mindestens einen Prozessor (3), mindestens einen Speicher (5) und mindestens eine Netzwerksteuerung (9) umfasst, wobei der mindestens eine Prozessor mit dem mindestens einen Speicher und der mindestens einen Netzwerksteuerung verbunden ist, wobei die mindestens eine Netzwerksteuerung (9) angepasst ist, um mit einem Netzwerk (13) verbunden zu werden, wobei das erste Steuergerät zu Folgendem angepasst ist:
Erzeugen, durch eine Anwendung (20a, 20b), mindestens eines Anzeigebefehls, wobei der mindestens eine Anzeigebefehl ein Rendern eines Frames, das ein dreidimensionales Bild umfasst, durch eine Grafikverarbeitungseinheit (7a, 7b) ermöglicht, wobei der Anzeigebefehl ein OpenGL-Befehl und/oder ein OpenGL-Shader-Befehl ist;
Empfangen, durch einen Grafikverarbeitungseinheit-Treiber (22a, 22b), des mindestens einen Anzeigebefehls in dem ersten Steuergerät;
Umwandeln, durch den Grafikverarbeitungseinheit-Treiber, der Anzeigebefehle in Grafikbefehle;
Bereitstellen, durch den Grafikverarbeitungseinheit-Treiber (22a, 22b), der Grafikbefehle an eine virtuelle Grafikverarbeitungseinheit (26a, 26b);
Sammeln einer Vielzahl von Grafikbefehlen durch die virtuelle Grafikverarbeitungseinheit (26a, 26b), wobei das Sammeln einer Vielzahl von Grafikbefehlen das Senden einer Bestätigung mindestens eines empfangenen Grafikbefehls durch die virtuelle Grafikverarbeitungseinheit-Vorrichtung an den Grafikverarbeitungseinheit-Treiber (22a, 22b) beinhaltet, wobei die Bestätigung vorgibt, dass mindestens ein Anzeige-Frame, das auf dem mindestens einen Grafik-oder Anzeigebefehl basiert, von einer GPU gerendert wurde, unabhängig davon, ob das mindestens eine Anzeige-Frame, das auf dem mindestens einen Grafikbefehl basiert, auf einer GPU des zweiten Steuergeräts gerendert wurde, wobei das Senden der Bestätigung ein Abgrenzen in OpenGL ist;
Bestimmen von Parametern der gesammelten Vielzahl von Grafikbefehlen, die in mindestens einem Abschnitt des mindestens eines Speichers (5) gespeichert sind, unter Verwendung mindestens einer Referenz zu dem mindestens einen Abschnitt des mindestens eines Speichers (5);
Ausrichten der Grafikbefehle und ihrer Parameter in sequentielle Daten, wobei die Referenzen auf den mindestens einen Abschnitt, in dem mindestens einen Speicher in einen Offset innerhalb der sequentiellen Daten umgewandelt werden;
Einkapseln, durch eine virtuelle Grafikverarbeitungseinheit-Vorrichtung, der erzeugten sequenziellen Daten in ein oder mehrere Netzwerkpakete;
Übertragen des mindestens einen Netzwerkpakets durch die virtuelle Grafikverarbeitungseinheit (26a, 26b) über das Computernetzwerk an ein zweites Steuergerät, das angepasst ist, um Anzeige-Frames mindestens eines Bilds gemäß den Anzeigebefehlen zu erzeugen, wobei das System ferner mindestens ein zweites Steuergerät des Fahrzeugs, insbesondere eine Vielzahl von zweiten Steuergeräten umfasst, wobei das zweite Steuergerät mindestens einen Prozessor (3), mindestens einen Speicher (5) mindestens eine Grafikverarbeitungseinheit, GPU, (7, 7a, 7b), mindestens einen Anzeigeanschluss, der mit dem Ausgang der GPU verbunden ist und mit mindestens einer Anzeige (11) verbunden werden kann, und mindestens eine Netzwerksteuerung (9) umfasst, wobei der mindestens eine Prozessor (3) mit dem mindestens einen Speicher (5), der GPU und die Netzwerksteuerung (9) verbunden ist, wobei der mindestens eine Netzwerksteuerung (9) angepasst ist, um mit einem Netzwerk (13) verbunden zu werden, wobei das zweite Steuergerät zu Folgendem angepasst ist:
Empfangen mindestens eines Netzwerkpakets von dem ersten Steuergerät (1, 1a, 1b, 1a', 1b', 42), das Netzwerkpaket umfassend sequenzielle Daten, die Grafikbefehle und ihre Parameter kodieren, wobei Parameter der Grafikbefehle, die aus Anzeigebefehlen umgewandelt werden, mit einem Offset innerhalb der sequenziellen Daten referenziert sind, wobei ein Anzeigebefehl ein Rendern eines Frames, das ein dreidimensionales Bild umfasst, durch eine Grafikverarbeitungseinheit (7a, 7b) ermöglicht;
Dekodieren der Grafikbefehle und Speichern ihrer Parameter in mindestens einem Abschnitt mindestens eines Speichers (5), wobei ein Dekodieren ein Umwandeln des Offsets in einen Verweis auf den mindestens einen Abschnitt in dem mindestens einen Speicher beinhaltet;
Konvertieren der Grafikbefehle in die Anzeigebefehle, die OpenGL/OpenGL für eingebettete Systeme, OpenGL ES oder GLES, API-Aufrufe für eine Grafikverarbeitungseinheit (GPU) sind;
Konvertieren der Anzeigebefehle und ihrer Parameter in spezifische Befehle der Grafikverarbeitungseinheit, GPU;
Bereitstellen der GPU-spezifischen Befehle an eine Grafikverarbeitungseinheit (7, 7a, 7b) des zweiten Steuergeräts (1, 1a, 1b, 1a', 1b', 44);
Rendern, durch die GPU, eines Anzeige-Frames basierend auf den GPU-spezifischen Befehlen, wobei das mindestens ein zweites Steuergerät angepasst ist, um die Netzwerkpakete empfängt, die die sequenziellen Daten beinhalten, die die Anzeigebefehle oder Grafikbefehle und ihre Parameter kodieren, die von dem mindestens einen ersten Steuergerät ausgegeben werden.

8. System nach Anspruch 7, wobei es ferner angepasst ist, um die Anzeigebefehle in orthogonale Funktionsbefehle umzuwandeln, die die vollständige Funktionalität der grafischen Verarbeitungseinheit und der Anzeige ausmachen; und wobei die Grafikbefehle aus einer im Vergleich zu den Anzeigebefehlen reduzierten Menge von Grafikbefehlen ausgewählt sind, wobei die Grafikbefehle vorzugsweise zwischen 10 und 50 Grafikbefehle, insbesondere zwischen 15 und 30 Grafikbefehle, beinhalten.

9. Fahrzeug, insbesondere Kraftfahrzeug, umfassend ein System nach Anspruch 7 oder 8.

## Revendications

1. Procédé pour transmettre une commande d'affichage d'une première unité de commande (1, 1a, 1b, 1a', 1 b', 42) d'un véhicule à une seconde unité de commande (1, 1 a, 1 b, 1 a', 1 b', 44) du véhicule, la seconde unité de commande étant espacée de la première unité de commande, comprenant des étapes d'un procédé pour faire fonctionner la première unité de commande (1, 1a, 1b, 1a', 1b', 42) afin de transmettre des commandes d'affichage sur un réseau informatique (13) à la seconde unité de commande (1, 1a, 1b, 1a', 1b', 46), comprenant :
la génération, par une application (20a, 20b) au niveau de la première unité de commande, d'au moins une commande d'affichage, la au moins une commande d'affichage permettant un rendu d'une trame comprenant une image tridimensionnelle par une unité de traitement graphique (7a, 7b), dans lequel la commande d'affichage est une commande OpenGL et/ou une commande de nuanceur OpenGL ;
la réception, par un pilote d'unité de traitement graphique (22a, 22b) sur la première unité de commande, de la au moins une commande d'affichage ;
la transformation des commandes d'affichage en commandes graphiques ;
la fourniture, par le pilote d'unité de traitement graphique (22a, 22b), à un dispositif d'unité de traitement graphique virtuel (26a, 26b) des commandes graphiques transformées à partir des commandes d'affichage ;
la collecte, par le dispositif d'unité de traitement graphique virtuel (26a, 26b), d'une pluralité de commandes graphiques, dans lequel la collecte d'une pluralité de commandes graphiques inclut l'envoi, par le dispositif d'unité de traitement graphique virtuel (26a, 26b), d'un accusé de réception d'au moins une commande graphique reçue au pilote d'unité de traitement graphique (22a, 22b), dans lequel l'accusé de réception prétend qu'au moins une trame d'affichage basée sur la au moins une commande graphique a été rendue par un GPU indépendamment du fait que la au moins une trame d'affichage basée sur la au moins une commande graphique ait été rendue sur un GPU de la seconde unité de commande, dans lequel l'envoi de l'accusé de réception est une clôture dans OpenGL ; la détermination des paramètres de la pluralité collectée de commandes graphiques stockées dans au moins une section de la au moins une mémoire (5) en utilisant au moins une référence à la au moins une section de la au moins une mémoire (5) ;
l'alignement des commandes graphiques et de leurs paramètres dans des données séquentielles, dans lequel les références à la au moins une section de la au moins une mémoire (5) sont transformées en un décalage dans les données séquentielles ;
l'encapsulation, par un dispositif d'unité de traitement graphique virtuel, des données séquentielles créées dans un ou plusieurs paquets de réseau ;
la transmission du au moins un paquet de réseau par le dispositif d'unité de traitement graphique virtuel (26a, 26b) sur le réseau informatique à la seconde unité de commande adaptée pour générer des trames d'affichage d'au moins une image selon les commandes d'affichage ; et le procédé comprend en outre des étapes de procédé pour faire fonctionner la seconde unité de commande (1, 1a, 1b, 1a', 1b', 44) afin de générer des trames d'affichage à partir de commandes d'affichage reçues sur le réseau informatique (13) depuis la première unité de commande, comprenant :
la réception d'au moins un paquet de réseau de la
première unité de commande (1, 1a, 1b, 1a', 1b',
42), le paquet de réseau comprenant des données séquentielles codant des commandes graphiques et leurs paramètres, dans lequel les paramètres des commandes graphiques transformées à partir de commandes d'affichage sont référencés avec un décalage dans les données séquentielles, dans lequel une commande d'affichage permet un rendu d'une trame comprenant une image tridimensionnelle par une unité de traitement graphique (7a, 7b) ;
le décodage des commandes graphiques et le stockage de leurs paramètres dans au moins une section d'au moins une mémoire (5), dans lequel le décodage inclut la transformation du décalage en une référence à la au moins une section dans au moins une mémoire (5) ;
la conversion des commandes graphiques en commandes d'affichage OpenGL/OpenGL pour les systèmes embarqués, OpenGL ES ou GLES, des appels d'API pour une unité de traitement graphique, GPU ;
la conversion des commandes d'affichage et de leurs paramètres en commandes spécifiques à l'unité de traitement graphique GPU ;
la fourniture des commandes spécifiques de GPU à une unité de traitement graphique (7, 7a, 7b) de la seconde unité de commande (1, 1a, 1b, 1a', 1b', 44) ;
le rendu d'un cadre d'affichage basé sur les commandes spécifiques du GPU.

2. Procédé selon la revendication 1, dans lequel les commandes d'affichage incluent des commandes de géométrie,
des commandes de texture et des commandes de nuanceur, dans lequel, en particulier, les
commandes de géométrie et de texture sont des commandes OpenGL, et/ou les commandes de nuanceur sont des langages d'ombrage OpenGL.

3. Procédé selon la revendication 1 ou 2, dans lequel les paramètres incluent des objets de tampon de trame d'une scène en 2D rendue par une CPU, des paramètres de scène et/ou des paramètres de caméra, impliquent des mélangeurs, des trameurs, des nuanceurs, des vertex, des surfaces, des échantillonneurs, des requêtes et/ou des flux cibles.

4. Procédé selon l'une quelconque des revendications précédentes, dans lequel les commandes d'affichage sont transformées en commandes fonctionnelles orthogonales qui constituent la fonctionnalité complète de l'unité de traitement graphique et d'affichage ; et dans lequel les commandes graphiques sont sélectionnées parmi un ensemble réduit de commandes graphiques par rapport aux commandes d'affichage, les commandes graphiques incluant de préférence entre 10 et 50 commandes graphiques, en particulier entre 15 et 30 commandes graphiques.

5. Procédé selon l'une des revendications précédentes, comprenant en outre : la fourniture de la trame d'affichage à au moins un écran (11).

6. Produit-programme informatique comportant des commandes pour l'exécution du procédé selon l'une quelconque des revendications précédentes, lorsqu'elles sont chargées et exécutées sur un ou plusieurs processeurs.

7. Système comprenant une ou plusieurs premières unités de commande d'un véhicule, chaque première unité de commande (1, 1a, 1b, 1a', 1b', 42) comprenant au moins un processeur (3), au moins une mémoire (5), et au moins un contrôleur de réseau (9), le au moins un processeur étant connecté à la au moins une mémoire et au au moins un contrôleur de réseau, le au moins un contrôleur de réseau (9) étant adapté pour être connecté à un réseau (13), dans lequel la première unité de commande est adaptée pour :
générer, par une application (20a, 20b), au moins une commande d'affichage, la au moins une commande d'affichage permettant un rendu d'une trame comprenant une image tridimensionnelle par une unité de traitement graphique (7a, 7b) dans lequel la commande d'affichage est une commande OpenGL et/ou une commande de nuanceur OpenGL ;
recevoir, par un pilote d'unité de traitement graphique (22a, 22b) sur la première unité de commande, la au moins une commande d'affichage ;
transformer, par le pilote de l'unité de traitement graphique, les commandes d'affichage en commandes graphiques ;
fournir, par le pilote d'unité de traitement graphique (22a, 22b), les commandes graphiques à un dispositif d'unité de traitement graphique virtuel (26a, 26b) ;
collecter, par le dispositif d'unité de traitement graphique virtuel (26a, 26b), d'une pluralité de commandes graphiques, dans lequel la collecte d'une pluralité de commandes graphiques inclut l'envoi, par le dispositif d'unité de traitement graphique virtuel, d'un accusé de réception d'au moins une commande graphique ou d'affichage reçue au pilote d'unité de traitement graphique (22a, 22b), dans lequel l'accusé de réception prétend qu'au moins une trame d'affichage basée sur la au moins une commande graphique ou d'affichage a été rendue par un GPU indépendamment du fait que la au moins une trame d'affichage basée sur la au moins une commande graphique a été rendue sur un GPU de la seconde unité de commande, dans lequel l'envoi de l'accusé de réception est une clôture en OpenGL ;
déterminer des paramètres de la pluralité collectée de commandes graphiques stockées dans au moins une section de la au moins une mémoire (5) en utilisant au moins une référence à la au moins une section de la au moins une mémoire (5) ;
aligner les commandes graphiques et leurs paramètres dans des données séquentielles, dans lequel les références à la au moins une section de la au moins une mémoire sont transformées en un décalage dans les données séquentielles ;
encapsuler, par un dispositif d'unité de traitement graphique virtuel, les données séquentielles créées dans un ou plusieurs paquets de réseau ;
transmettre l'au moins un paquet de réseau par le dispositif d'unité de traitement graphique virtuel (26a, 26b) sur le réseau informatique à une seconde unité de commande adaptée pour générer des trames d'affichage d'au moins une image selon les commandes d'affichage, dans lequel le système comprend en outre au moins une seconde unité de commande du véhicule, en particulier une pluralité de secondes unités de commande, dans lequel la seconde unité de commande comprend au moins un processeur (3), au moins une mémoire (5), au moins une unité de traitement graphique, GPU, (7, 7a, 7b) au moins un port d'affichage connecté à la sortie du GPU et pouvant être connecté à au moins un affichage (11),
et au moins un contrôleur de réseau (9), le au moins un processeur (3) étant connecté à la au moins une mémoire (5), au GPU et au contrôleur de réseau (9), le au moins un contrôleur de réseau (9) étant adapté pour être connecté à un réseau (13), la seconde unité de commande étant adaptée pour :
recevoir au moins un paquet de réseau de la
première unité de commande (1, 1a, 1b, 1a', 1'b, 42),
le paquet de réseau comprenant des données séquentielles codant des commandes graphiques et leurs paramètres, dans lequel les paramètres des commandes graphiques transformées à partir de commandes d'affichage sont référencés avec un décalage dans les données séquentielles, dans lequel une commande d'affichage permet un rendu d'une trame comprenant une image tridimensionnelle par une unité de traitement graphique (7a, 7b) ;
décoder les commandes graphiques et le stockage de leurs paramètres dans au moins une section d'au moins une mémoire (5), dans lequel le décodage inclut la transformation du décalage en une référence à la au moins une section dans au moins une mémoire ;
convertir les commandes graphiques en commandes d'affichage OpenGL/OpenGL pour les systèmes embarqués, OpenGL ES ou GLES,
les appels API pour une unité de traitement graphique, GPU ;
convertir les commandes d'affichage et leurs paramètres en unité de traitement graphique,
GPU, commandes spécifiques ;
fournir les commandes spécifiques de GPU à une unité de traitement graphique (7, 7a, 7b) de la seconde unité de commande (1, 1a, 1b, 1a', 1b', 44) ;
rendre, par le GPU, une trame d'affichage basée sur les commandes spécifiques au GPU, dans lequel la au moins une seconde unité de commande est adaptée pour recevoir les paquets de réseau comprenant les données séquentielles codant les commandes d'affichage ou les commandes graphiques et leurs paramètres émis par la au moins une première unité de commande.

8. Système selon la revendication 7, dans lequel il est en outre adapté pour transformer les commandes d'affichage en commandes fonctionnelles orthogonales qui constituent la fonctionnalité complète d'unité de traitement graphique et d'affichage ; et dans lequel les commandes graphiques sont sélectionnées parmi un ensemble réduit de commandes graphiques par rapport aux commandes d'affichage, dans lequel les commandes graphiques incluent de préférence entre 10 et 50 commandes graphiques, en particulier entre 15 et 30 commandes graphiques.

9. Véhicule, en particulier un véhicule automobile, comprenant un système selon la revendication 7 ou 8.
